(19) Europäisches Patentamt
European Patent Office
Office européen des brevets

(11) **EP 3 944 104 A1**

(12) **EUROPEAN PATENT APPLICATION**

(43) Date of publication:
**26.01.2022 Bulletin 2022/04**

(21) Application number: **21167146.6**

(22) Date of filing: **07.04.2021**

(51) International Patent Classification (IPC):
**G06F 17/11** (2006.01)    **G06N 5/00** (2006.01)

(52) Cooperative Patent Classification (CPC):
**G06F 17/11; G06N 5/003**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.07.2020 JP 2020124683**

(71) Applicant: **FUJITSU LIMITED**
**Kanagawa 211-8588 (JP)**

(72) Inventors:
• **Iwata, Jiyunichi**
**Kawasaki-shi, Kanagawa (JP)**
• **Ohfuchi, Mari**
**Kawasaki-shi, Kanagawa (JP)**

(74) Representative: **Hoffmann Eitle**
**Patent- und Rechtsanwälte PartmbB**
**Arabellastraße 30**
**81925 München (DE)**

(54) **OPTIMIZATION DEVICE, OPTIMIZATION METHOD, AND OPTIMIZATION PROGRAM**

(57) An optimization device is configured to perform an iteration processing until a predetermined condition is satisfied, the iteration processing including: processing of generating a quadratic function that is approximate to an objective function within a predetermined range from a first reference value that indicates a value of a variable of the objective function; processing of calculating a second reference value that indicates a value of the variable by seeking for an extreme value of the quadratic function; processing of calculating a third reference value that indicates a value of the variable based on the second reference value and the first reference value; and processing of updating the first reference value based on the third reference value, the predetermined condition being a condition regarding a distance between the first reference value and the second reference value or a distance between the first reference value and the third reference value.

FIG. 1

**Description**

FIELD

The embodiments discussed herein are related to an optimization device, an optimization method, and an optimization program.

BACKGROUND

Because of machine learning, there has been increasing cases where an objective variable is expressed by a complex expression using an explanatory variable. Therefore, there is an increasing demand for optimization for acquiring a value of a variable that makes an objective function expressed by a complicated expression have an extreme value. According to the optimization of the objective function, the optimal measurement conditions can be acquired based on measurement data obtained by changing conditions, for example.

Note that since it is difficult to acquire an extreme value of a complicated objective function, the objective function may be approximated to a lower-order function. Then, the objective function may be optimized based on the variable value that makes the approximate function have an extreme value.

As a technique related to optimization, for example, a combinatorial optimization method for obtaining a better approximate solution for a combinatorial optimization problem for finding a combination that minimizes a given objective function f(X) among combinations that satisfy a certain constraint condition has been proposed. Furthermore, for example, a nonlinear optimization program for a continuous value optimization problem that enables fast processing of optimal control has been proposed.

Japanese Laid-Open Patent Publication No. 6-19951 and Japanese Laid-Open Patent Publication No.2018-87753 are disclosed as related art.

When an objective function is approximated to a quadratic function in the optimization of the objective function, the value of the variable (optimal value of the variable in the quadratic function) that makes the approximate quadratic function have an extreme value may be acquired by an Ising machine. The Ising machine is a non-Von Neumann computer inspired by quantum phenomena, and is also referred to as an annealing machine. Then, by repeating the following approximation using the optimal value of the variable in the quadratic function, the optimal value of the variable in the quadratic function can be brought close to the value of the variable (optimal value of the variable in the objective function) that makes the objective function have an extreme value.

However, in a case where the optimal value of the variable in the objective function exists between the optimal value of the variable in the approximate quadratic function obtained by the previous approximation and the optimal value of the variable in the approximate quadratic function this time, the optimal value of the variable in the approximate quadratic function this time is not brought close enough to the optimal value of the variable in the objective function. Therefore, the number of repetitions of the approximation increases, and the optimization processing time increases.

In one aspect of this disclosure described below, there provided is a solution to reduce the calculation time for optimization.

SUMMARY

According to an aspect of the embodiments, an optimization device includes: memory; and processor circuitry coupled to the memory, the processor circuitry being configured to perform processing, the processing including: performing an iteration processing until a predetermined condition is satisfied, the iteration processing including: processing of generating a quadratic function that is approximate to an objective function within a predetermined range from a first reference value that indicates a value of a variable of the objective function; processing of calculating a second reference value that indicates a value of the variable by seeking for an extreme value of the quadratic function; processing of calculating a third reference value that indicates a value of the variable based on the second reference value and the first reference value; and processing of updating the first reference value based on the third reference value, the predetermined condition being a condition regarding a distance between the first reference value and the second reference value or a distance between the first reference value and the third reference value; and in response that the predetermined condition is satisfied, outputting the first reference value as a value of the variable that makes the objective function have an extreme value.

The object and advantages of the invention will be realized and attained by means of the elements and combinations particularly pointed out in the claims.

It is to be understood that both the foregoing general description and the following detailed description are exemplary and explanatory and are not restrictive of the invention.

According to one aspect of this disclosure, the calculation time for optimization can be reduced.

BRIEF DESCRIPTION OF DRAWINGS

FIG. 1 illustrates an example of an optimization method according to a first embodiment;
FIG. 2 is a diagram illustrating an example of a system configuration according to the second embodiment;
FIG. 3 is a diagram illustrating an example of hardware of a server;
FIG. 4 is a diagram illustrating an example of an Ising machine;
FIG. 5 is a diagram (No. 1) illustrating an example of a method of fitting an objective function to a quadratic function;
FIG. 6 is a diagram (No. 2) illustrating an example of a method of fitting an objective function to a quadratic function;
FIG. 7 is a block diagram illustrating server functions;
FIG. 8 is a diagram illustrating an example of update processing of fitting reference values;
FIG. 9 is a flowchart (Part 1) illustrating an example of the procedure for optimizing an objective function;
FIG. 10 is a flowchart (Part 2) illustrating an example of the procedure for optimizing an objective function;
FIG. 11 is a diagram illustrating an example of the relationship between the number of repetitions of the update processing and the function value of the objective function; and
FIG. 12 is a diagram illustrating another example of the relationship between the number of repetitions of the update processing and the function value of the objective function.

DESCRIPTION OF EMBODIMENTS

Hereinafter, embodiments are described with reference to the drawings. Note that each of the embodiments may be implemented in combination with at least one of the other embodiments as long as no contradiction arises.

[First Embodiment]

First, a first embodiment will be described. The first embodiment is an optimization method capable of reducing the calculation time for optimization.

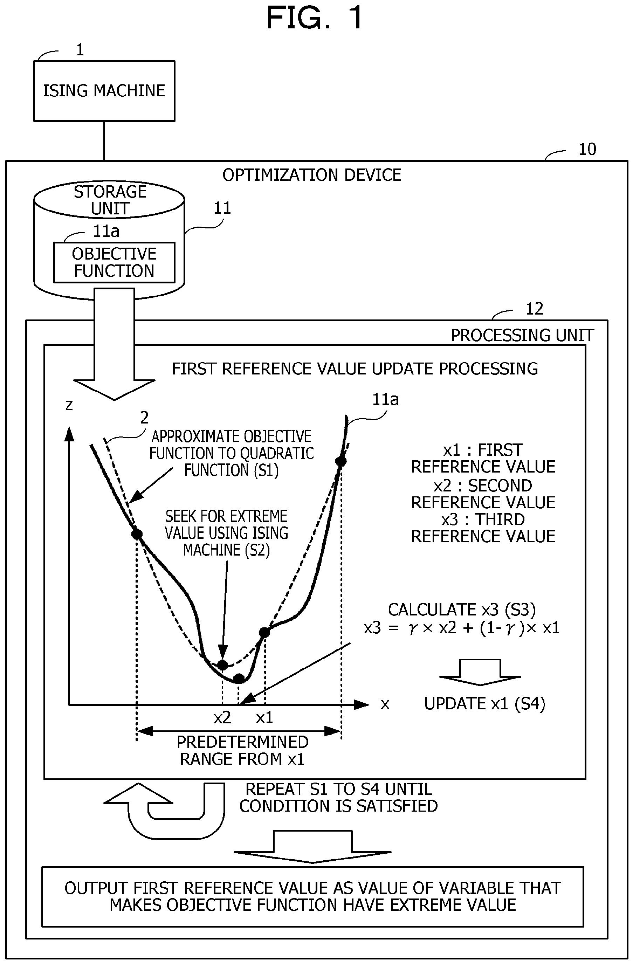

FIG. 1 illustrates an example of an optimization method according to a first embodiment. FIG. 1 illustrates an optimization device 10 that implements an optimization method capable of reducing the calculation time for optimization. The optimization device 10 is connected to an Ising machine 1, and can implement an optimization method capable of reducing the calculation time for optimization by, for example, executing an optimization program. The Ising machine 1 is a non-Von Neumann computer that utilizes quantum phenomena. For example, the Ising machine 1 can quickly obtain a stable state in which the energy function of the Ising model has the minimum value (which may be a local minimum value sufficiently close to the minimum value).

The optimization device 10 includes a storage unit 11 and a processing unit 12. The storage unit 11 is, for example, a memory or a storage device included in the optimization device 10. The processing unit 12 is, for example, a processor or an arithmetic circuit included in the optimization device 10.

The storage unit 11 stores an objective function 11a. The objective function 11a indicates the correspondence between one or more variables and the function value determined by the values of the one or more variables. For example, the objective function 11a is an expression that expresses the function value using one or more variables. Note that in the example illustrated in FIG. 1, the function value z of the objective function 11a is determined by the value of one variable x of the objective function 11a for simplicity of description.

The processing unit 12 identifies the value of the variable x (the optimal value of the variable x) when the objective function 11a has an extreme value. For example, the extreme values of the objective function 11a include the minimum value, the maximum value, the local minimum value sufficiently close to the minimum value, the local maximum value sufficiently close to the maximum value of the objective function 11a, and the like. Here, the processing unit 12 approximates the objective function 11a based on a first reference value x1 indicating the value of the variable x of the objective function 11a, and repeats processing of updating the first reference value x1 based on the result of the extreme seeking of the approximate function. Then, the processing unit 12 outputs the final first reference value x1 as the optimal value of the variable x. First, the processing unit 12 determines an initial value of the first reference value x1. For example, the processing unit 12 may randomly determine an initial value of the first reference value x1 or may determine an initial value based on an input from a user.

In the update processing of the first reference value, the processing unit 12 first generates a quadratic function 2 that is approximate to the objective function 11a within a predetermined range from the first reference value x1 (step S1). For example, the processing unit 12 selects a plurality of values of the variable x from within a predetermined range (the first reference value x1 may or may not be selected), and identifies the quadratic function 2 that passes through points on the objective function 11a corresponding to the respective selected values of the variable x.

Next, the processing unit 12 calculates a second reference value x2 indicating a value of the variable x by seeking for an extreme value of the quadratic function 2. Here, the processing unit 12 causes the Ising machine 1 to seek for an extreme value of the quadratic function 2 (step S2). For example, the processing unit 12 sets an energy function that has the minimum value when bits corresponding to respective candidates for the value of the variable x that makes the quadratic function 2 have an extreme value and a bit corresponding to the value of the variable x that makes the quadratic function 2 have an extreme value are 1. The processing unit 12 causes the Ising machine 1 to identify a stable state in which the set energy function has the minimum value. Then, the processing unit 12 calculates the second reference value x2 based on a result of seeking for an extreme value of the quadratic function 2 by the Ising machine 1. For example, the processing unit 12 sets, as the second reference value x2, the value of the variable x corresponding to the bit that becomes 1 in the state identified by the Ising machine 1.

The processing unit 12 calculates a third reference value x3 indicating a value of the variable x based on the second reference value x2 and the first reference value x1 (step S3). For example, the processing unit 12 calculates the third reference value x3 between the second reference value x2 and the first reference value x1 using an expression, $x3 = \gamma \times x2 + (1-\gamma) \times x1$, where $0 < \gamma < 1$.

The processing unit 12 updates the first reference value x1 based on the third reference value x3 (step S4). For example, the processing unit 12 calculates a first function value that is a value of the objective function 11a when the value of the variable x is set to the second reference value x2, and a second function value of the objective function 11a when the value of the variable x is set to the third reference value x3. Then, the processing unit 12 updates the first reference value x1 to the second reference value x2 or the third reference value x3 based on the magnitude relationship between the first function value and the second function value. For example, in the processing of acquiring the minimum value of the objective function 11a, the processing unit 12 updates the first reference value x1 to the second reference value x2 when the first function value is smaller than the second function value, and updates the first reference value x1 to the third reference value x3 when the first function value is larger than the second function value.

Furthermore, the processing unit 12 updates the width of the predetermined range from the first reference value x1 based on the distance between the first reference values x1 before and after the update. For example, the processing unit 12 updates the width of the predetermined range from the first reference value x1 to make the width of the predetermined range from the first reference value x1 smaller as the distance between the first reference values x1 before and after the update is smaller.

The processing unit 12 repeats the above processing until a predetermined condition regarding the distance between the first reference value x1 and the second reference value x2 or the distance between the first reference value x1 and the third reference value x3 is satisfied. That is, the processing unit 12 repeats processing of generating the quadratic function 2, processing of calculating the second reference value x2, processing of calculating the third reference value x3, and processing of updating the first reference value x1 (processing of steps S1 to S4) until a predetermined condition is satisfied. For example, the processing unit 12 repeats the processing of steps S1 to S4 until the distance between the first reference value x1 and the second reference value x2 or the distance between the first reference value x1 and the third reference value x3 becomes equal to or smaller than a threshold value.

Then, the processing unit 12 outputs, as the optimal value of the variable x, the first reference value x1 when a predetermined condition is satisfied. That is, the processing unit 12 repeats the update processing of the first reference value x1 and outputs the final first reference value x1 as the optimal value of the variable x. For example, the processing unit 12 displays the final first reference value x1 as the optimal value of the variable x on a display device (not illustrated).

In this way, the processing unit 12 repeats processing of updating the first reference value x1 based on the third reference value x3 calculated based on the second reference value x2 and the first reference value x1 obtained by seeking for the extreme value of the quadratic function 2 that is approximate to the objective function 11a within a predetermined range from the first reference value x1. Then, the processing unit 12 outputs, as the optimal value of the variable x, the first reference value x1 when a predetermined condition is satisfied.

Here, as another method for acquiring the optimal value of the variable x, it is also conceivable to repeat updating the first reference value x1 to the second reference value x2 to bring the first reference value x1 closer to the optimal value of the variable x. However, when the first reference value x1 is updated to the second reference value x2, in a case where the optimal value of the variable x is at almost the same distance from the first reference value x1 and from the second reference value x2 (for example, between the first reference value x1 and the second reference value x2), the first reference value x1 is not brought very close to the optimal value of the variable x.

On the other hand, the optimization device 10 updates the first reference value x1 based on the third reference value x3, so that the optimization device 10 can update the first reference value x1 taking the first reference value x1 before update into consideration as well as the second reference value x2. Thus, the optimization device 10 can bring the first reference value x1 closer to the optimal value of the variable x that is at almost the same distance from the first reference value x1 and from second reference value x2. Therefore, the optimization device 10 can reduce the number of repetitions of the update processing of the first reference value x1 and can reduce the calculation time for optimization.

Furthermore, the processing unit 12 calculates a third reference value x3 that is between the second reference value x2 and the first reference value x1 in the update processing of the first reference value x1. Thus, the optimization device 10 can bring the first reference value x1 closer to the optimal value of the variable x between the first reference value x1 and the second reference value x2 in the update processing of the first reference value x1.

Furthermore, the processing unit 12 causes the Ising machine 1 to seek for an extreme value of the quadratic function 2 and calculates the second reference value x2 based on a result of seeking for an extreme value of the quadratic function 2. Thus, the optimization device 10 can quickly calculate the second reference value x2.

Furthermore, the processing unit 12 repeats the processing of updating the first reference value x1 until the distance between the first reference value x1 and the second reference value x2 or the distance between the first reference value x1 and the third reference value x3 becomes equal to or smaller than a threshold value. Thus, the optimization device 10 can output the first reference value x1 when the values have converged as the optimal value of the variable x.

Furthermore, the processing unit 12 updates the width of the predetermined range from the first reference value x1 based on the distance between the first reference values x1 before and after the update. Thus, the optimization device 10 can efficiently narrow down the optimal value of the variable x.

Furthermore, the processing unit 12 calculates a first function value that is a value of the objective function 11a when the value of the variable x is set to the second reference value x2, and a second function value of the objective function 11a when the value of the variable x is set to the third reference value x3. Then, the processing unit 12 updates the first reference value x1 to the second reference value x2 or the third reference value x3 based on the magnitude relationship between the first function value and the second function value. Thus, the optimization device 10 can update the first reference value x1 to one of the second reference value x2 and the third reference value x3, whichever is closer to the optimal value of the variable x.


[Second Embodiment]

Next, a second embodiment will be described. The second embodiment is an example of a system that calculates a combination of values of variables that makes the objective function have the minimum value using the Ising machine. For example, the objective function is an expression that expresses the objective variable to be minimized using a plurality of explanatory variables and that is generated by machine learning using numerical data. Furthermore, the Ising machine seeks for a combination of bit values that makes an Ising model indicating a problem to be solved is in a stable state.

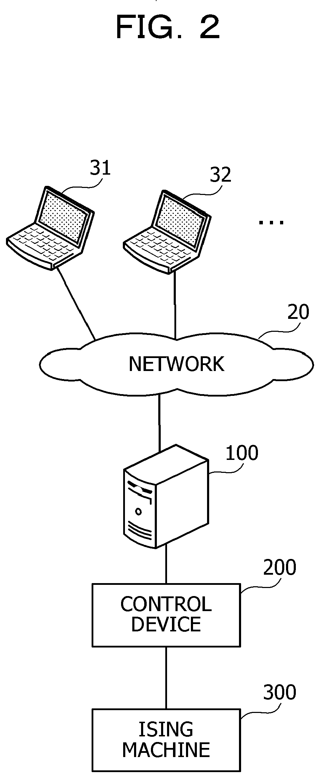

FIG. 2 is a diagram illustrating an example of a system configuration according to the second embodiment. To a server 100, terminal devices 31, 32,... are connected via a network 20. The terminal devices 31, 32,... are computers used by users who request calculation of the combination of the values of the variables that makes the objective function have the minimum value. The server 100 receives a request from the terminal devices 31, 32,... for calculation of the combination of values of the variables that makes the objective function have the minimum value.

The server 100 repeats the processing of approximating the objective function within a predetermined range to a quadratic function and updating the range for approximation of the objective function based on a combination of values of the variables that makes the approximation quadratic function have the minimum value to calculate a combination of variables that makes the objective function have the minimum value. Here, the server 100 requests a control device 200 to identify a combination of values of the variables that makes the approximate quadratic function to the objective function have the minimum value.

The control device 200 generates an energy function having a minimum value in a state where a bit is 1 when the bit corresponds to the combination of values of the variables that makes the approximate quadratic function obtained by the server 100 have the minimum value. Then, the control device 200 controls an Ising machine 300 such that the Ising machine 300 sets bits corresponding to value candidates for the respective variables of the quadratic function and identifies the state in which the energy function has the minimum value.

The Ising machine 300 simulates the state transition of the Ising model using a digital circuit based on the control from the control device 200, and seeks for the state (combination of bit values) at which the energy function has the minimum value. The server 100 acquires the combination of bit values when the energy function has the minimum value from the Ising machine 300 via the control device 200, and identifies a combination of values of the variables that makes the quadratic function have the minimum value.

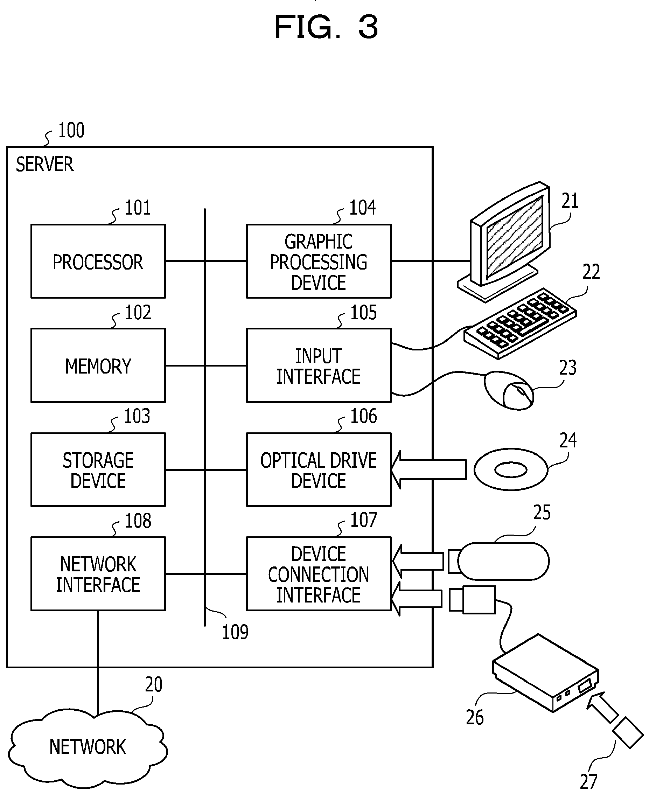

FIG. 3 is a diagram illustrating an example of hardware of a server. The entire server 100 is controlled by a processor 101. To the processor 101, a memory 102 and a plurality of peripheral devices are connected via a bus 109. The processor 101 may be a multiprocessor. The processor 101 is, for example, a central processing unit (CPU), a micro processing unit (MPU), or a digital signal processor (DSP). At least a part of functions implemented by execution of a program by the processor 101 may be implemented by an electronic circuit such as an application specific integrated circuit (ASIC) and a programmable logic device (PLD).

The memory 102 is used as a main storage device of the server 100. The memory 102 temporarily stores at least a part of an operating system (OS) program and an application program to be executed by the processor 101. Furthermore, the memory 102 stores various types of data used in processing by the processor 101. As the memory 102, for example, a volatile semiconductor storage device such as a random access memory (RAM) is used.

The peripheral devices connected to the bus 109 include a storage device 103, a graphic processing device 104, an input interface 105, an optical drive device 106, a device connection interface 107, and a network interface 108.

The storage device 103 electrically or magnetically writes/reads data in/from a built-in recording medium. The storage device 103 is used as an auxiliary storage device of a computer. The storage device 103 stores an OS program, an application program, and various types of data. Note that, as the storage device 103, for example, a hard disk drive (HDD) or a solid state drive (SSD) may be used.

To the graphic processing device 104, a monitor 21 is connected. The graphic processing device 104 displays an image on a screen of the monitor 21 according to an instruction from the processor 101. Examples of the monitor 21 include a display device using an organic electro luminescence (EL), a liquid crystal display device, and the like.

To the input interface 105, a keyboard 22 and a mouse 23 are connected. The input interface 105 transmits signals transmitted from the keyboard 22 and the mouse 23 to the processor 101. Note that the mouse 23 is an example of a pointing device, and other pointing devices may also be used. Other pointing devices include a touch panel, a tablet, a touch pad, a track ball, and the like.

The optical drive device 106 uses laser light or the like to read data recorded on an optical disc 24 or write data to the optical disc 24. The optical disc 24 is a portable recording medium on which data is recorded so as to be readable by reflection of light. Examples of the optical disc 24 include a digital versatile disc (DVD), a DVD-RAM, a compact disc read only memory (CD-ROM), a CD-recordable (R)/rewritable (RW), and the like.

The device connection interface 107 is a communication interface for connecting peripheral devices to the server 100. For example, to the device connection interface 107, a memory device 25 and a memory reader/writer 26 may be connected. The memory device 25 is a recording medium having a communication function with the device connection interface 107. The memory reader/writer 26 is a device that writes data in a memory card 27 or reads data from the memory card 27. The memory card 27 is a card type recording medium.

The network interface 108 is connected to the network 20. The network interface 108 exchanges data with another computer or a communication device via the network 20. The network interface 108 is a wired communication interface that is connected to a wired communication device such as a switch or a router with a cable. Furthermore, the network interface 108 may be a wireless communication interface that is connected to and communicates with a wireless communication device such as a base station or an access point by radio waves.

The server 100 may implement a processing function according to the second embodiment with hardware as described above. Note that the control device 200 can also be implemented by hardware similar to the server 100.

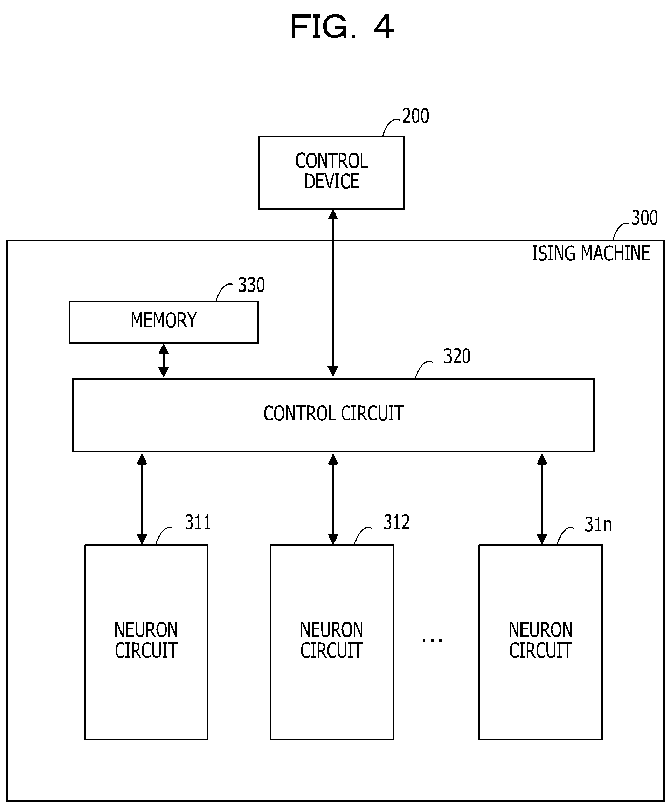

FIG. 4 is a diagram illustrating an example of the Ising machine. The Ising machine 300 includes neuron circuits 311, 312,..., 31n, a control circuit 320, and a memory 330.

Each of the neuron circuits 311 to 31n calculates a first value based on the sum of the products of a plurality of weighting coefficients indicating whether they are connected to a plurality of neuron circuits other than themselves and a plurality of output signals of the plurality of other neuron circuits. Then, each of the neuron circuits 311 to 31n outputs a bit value of 0 or 1 based on the comparison result between the threshold value and the second value obtained by adding the noise value to the first value.

The control circuit 320 performs initial setting processing of the Ising machine 300 and the like based on the information supplied from the control device 200. Moreover, after repeating processing of determining neurons to be updated a predetermined times, the control circuit 320 acquires the bit value of each neuron corresponding to the state variable of the Ising model held in the memory 330, and transmits the bit values to the control device 200 as a solution to the optimization problem.

The control circuit 320 can be implemented using an electronic circuit for a specific purpose such as an ASIC or a field programmable gate array (FPGA). Note that the control circuit 320 may be a processor such as a CPU or a DSP. In that case, the processor performs the above-described processing by executing a program stored in a memory (not illustrated).

The memory 330 holds, for example, the bit values of respective neurons. The memory 330 can be implemented by, for example, a register or a RAM. The memory 330 can also hold the minimum value of energy and the bit values of the respective neurons when the minimum value is obtained. In this case, the control circuit 320 may, after repetition of processing of determining neurons to be updated a predetermined times, acquire the minimum value of energy and the bit values of the respective neurons when the minimum value is obtained from the memory 330, and transmit the values to the control device 200.

The Ising machine 300 illustrated in FIG. 4 can quickly solve the combination optimization problem expressed by the Ising model. Note that the energy function of the Ising model handled by the Ising machine 300 is expressed by a quadratic or lower-degree expression. Therefore, the server 100 approximates (fits) the objective function to a quadratic function, and identifies a value of the variable that minimizes the quadratic function to which the objective function has been fitted in cooperation with the Ising machine 300. The server 100 repeats processing of fitting the objective function to the quadratic function while updating the center of the fitting based on the value of the variable that minimizes the quadratic function to which the objective function has been fitted. Thus, the server 100 brings the center of fitting closer to the value of the variable that minimizes the objective function.

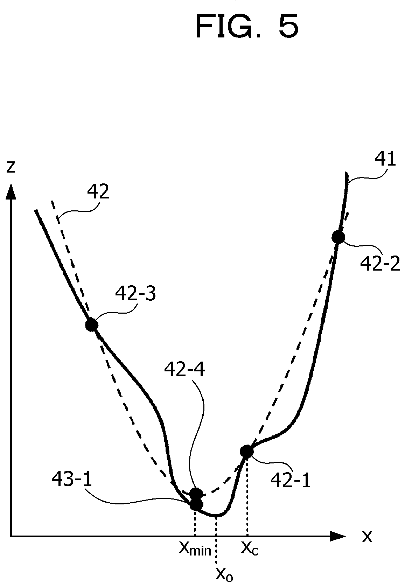

FIG. 5 is a diagram (No. 1) illustrating an example of a method of fitting an objective function to a quadratic function. In FIG. 5, an objective function 41 is illustrated on the coordinates where the vertical axis is z and the horizontal axis is x. Note that, in the example illustrated in FIG. 5, the function value z of the objective function 41 is determined by the value of one variable x of the objective function 41 for simplicity of description.

The server 100 fits the objective function 41 to a quadratic function 42 while setting, as the center of fitting, a center point 42-1 on the objective function 41 where x coordinate is $x_c$. For example, the server 100 identifies the quadratic function 42 that passes through the center point 42-1 and evaluation points 42-2 and 42-3 on the objective function 41 where x coordinates are separated from $x_c$ by a predetermined value. Here, the server 100 generates an energy function for acquiring $x_{min}$ that is a value of the variable x when the quadratic function 42 has the minimum value, and causes the Ising machine 300 to identify the stable state of the Ising model expressed by the generated energy function. Then, the server 100 identifies, based on the stable state of the Ising model identified by the Ising machine 300, a minimum point 42-4 that is a point where the quadratic function 42 has the minimum value (that is, a point where the x coordinate is $x_{min}$).

Here, it is conceivable that the server 100 fits the objective function 41 to a quadratic function while setting, as the center of fitting, a center point 43-1 on the objective function 41 where x coordinate is $x_{min}$. However, $x_o$ that is a value of the variable x that makes the objective function 41 have the minimum value is between $x_{min}$ and $x_c$. Thus, the center of fitting after the update is not brought close enough to $x_o$ from that before the update. Therefore, the server 100 determines the center of the next fitting based on the center point 42-1, which is the center of the fitting this time, and the minimum point 42-4 of the quadratic function 42, to which the objective function 41 is fitted this time.

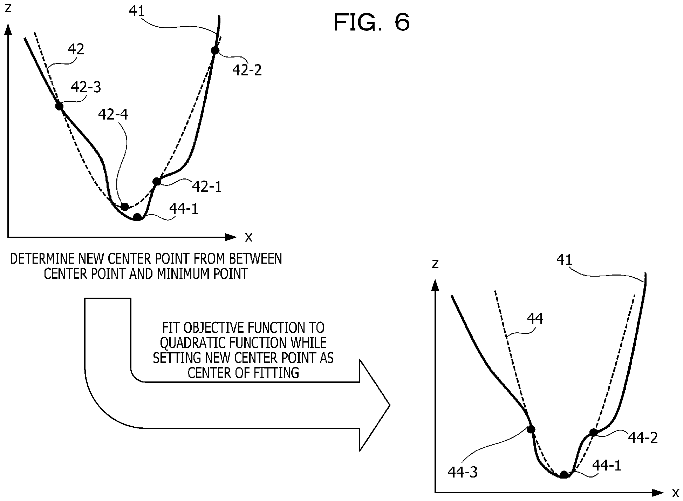

FIG. 6 is a diagram (No. 2) illustrating an example of a method of fitting an objective function to a quadratic function. The server 100 determines a center point 44-1 that is the center (new center point) of the next fitting from between the center point 42-1 and the minimum point 42-4. For example, the server 100 determines a point on the objective function 41 that has a value between $x_c$, which is the x coordinate of the center point 42-1, and $x_{min}$, which is the x coordinate of the minimum point 42-4, as a center point 44-1.

Then, the server 100 fits the objective function 41 to a quadratic function 44 while setting the center point 44-1 as the center of fitting. For example, the server 100 identifies the quadratic function 44 that passes through the center point 44-1 and evaluation points 44-2 and 44-3 on the objective function 41 where x coordinate is separated from the x coordinate of the center point 44-1 by a predetermined value. Note that the server 100 may make the distance from the x coordinate of the center point to the x coordinate of the evaluation points (that is, the width of the fitting range) smaller than that of the previous fitting.

As described above, the server 100 repeats the processing of determining the center of the next fitting from between the center of the fitting this time and the minimum point of the quadratic function, to which the objective function 41 is fitted this time. Thus, the server 100 can bring the center of fitting closer to the value of the variable that makes the objective function 41 have the minimum value even if the value of the variable that makes the objective function 41 have the minimum value is between the center of fitting this time and the value of the variable that makes the quadratic function have the minimum value.

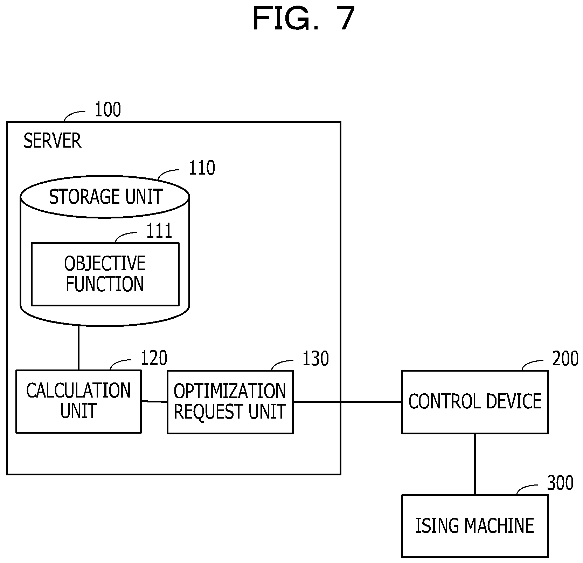

FIG. 7 is a block diagram illustrating server functions. The server 100 includes a storage unit 110, a calculation unit 120, and an optimization request unit 130. The storage unit 110 stores an objective function 111. The objective function 111 is an expression that expresses the objective variable to be minimized using a plurality of explanatory variables. For example, the objective function 111 may be generated by the terminal devices 31, 32,... through machine learning, or by the server 100 through machine learning using numerical data acquired from the terminal devices 31, 32,.... Note that in the following, the explanatory variables of the objective function 111 are simply referred to as variables, and the value of the objective variable of the objective function 111 determined by the values of the explanatory variables of the objective function 111 is referred to as a function value of the objective function 111.

The calculation unit 120 repeats processing of fitting the objective function 111 to a quadratic function while updating the reference values (fitting reference values) that are the centers of fitting for the respective variables of the objective function 111. First, the calculation unit 120 calculates the function values of the objective function 111 for a plurality of combinations each obtained by selecting a value of each variable of the objective function 111 from within a predetermined range centered on the corresponding fitting reference value. Then, the calculation unit 120 fits the objective function 111 to a quadratic function based on the function values of the respective combinations of the values of the variables of the objective function 111.

Next, the calculation unit 120 calculates the values of the respective variables that make the fitted quadratic function have the minimum value (optimal values of the quadratic function). For example, the calculation unit 120 causes the optimization request unit 130 to generate an energy function for calculating each of the optimal values of the quadratic function and request the Ising machine 300 to optimize the energy function.

Then, the calculation unit 120 updates the fitting reference values based on the respective optimal values of the quadratic function and the respective fitting reference values. For example, the calculation unit 120 calculates a value (intermediate reference value) between each of the optimal values of the quadratic function and the corresponding fitting reference value. Then, the calculation unit 120 updates the fitting reference value to one of the optimal value of the quadratic function and the intermediate reference value whichever makes the objective function 111 smaller when it is set as the value of the variable of the objective function 111. Furthermore, the calculation unit 120 updates the width of the predetermined range (fitting range) centered on each of the fitting reference values based on the distance between the fitting reference values before and after the update.

The calculation unit 120 repeats the processing of fitting the objective function 111 to a quadratic function until the distances between the fitting reference values and the optimal values of the quadratic function or the intermediate reference values become equal to or smaller than a threshold value. Then, the calculation unit 120 outputs each of the fitting reference values when the distances from the optimal values of the quadratic function or the intermediate reference values are equal to or smaller than the threshold value as the values of the respective variables that make the objective function 111 have the minimum value. For example, the calculation unit 120 causes the terminal devices 31, 32,... to display each of the fitting reference values when the distances from the optimal values of the quadratic function or the intermediate reference values are equal to or smaller than the threshold value as the values of the respective variables that make the objective function 111 have the minimum value.

The optimization request unit 130 generates an energy function for calculating each optimal value of the quadratic function. For example, the optimization request unit 130 generates an energy function that has the minimum value when a bit corresponding to the optimal value of the quadratic function becomes 1 among the bits corresponding to the respective candidates for the optimal values of the quadratic function. Then, the optimization request unit 130 transmits an optimization request for the energy function using the Ising machine 300 to the control device 200.

Since the server 100 has such a function, it becomes possible to calculate values of the variables that make the objective function 111 have the minimum value. Note that the function of each element illustrated in FIG. 7 may be implemented, for example, by allowing a computer to execute a program module corresponding to the element.

Next, a method of repeating the update of each fitting reference value will be described.

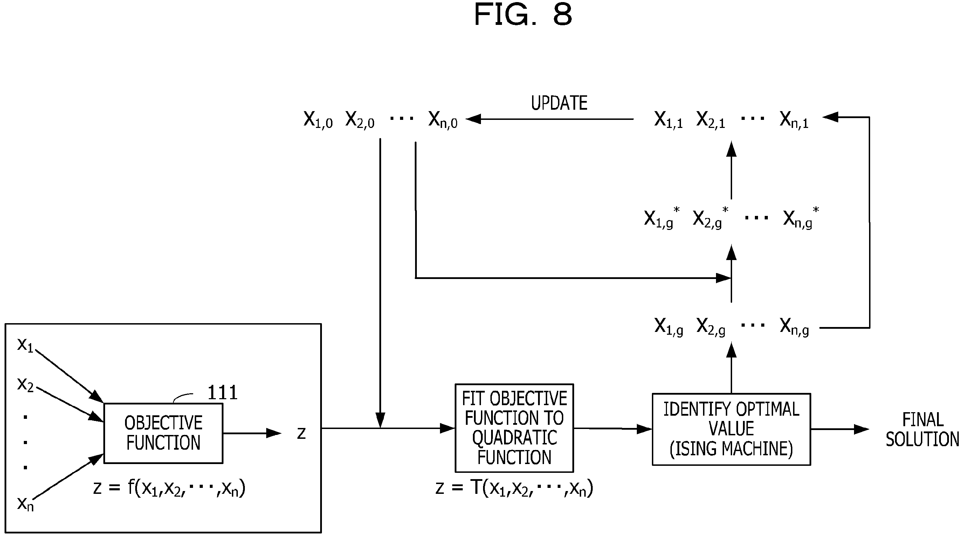

FIG. 8 is a diagram illustrating an example of update processing of the fitting reference values. FIG. 8 illustrates an update method of the fitting reference values $X_{1,0}$, $X_{2,0}$,..., $X_{n,0}$, which are the values of the variables $x_1$, $x_2$,..., $x_n$ of the objective function 111, respectively. Note that the objective function 111 is expressed as $z = f(x_1, x_2,...,x_n)$.

The calculation unit 120 fits the objective function 111 to a quadratic function $z = T(x_1, x_2,...,x_n)$ centering on the fitting reference values $X_{1,0}$, $X_{2,0}$,..., $X_{n,0}$. For example, the calculation unit 120 calculates the function value of the objective function 111 for each of the $3^n$ combinations each obtained by selecting a value of the variable $x_i$ of the objective function 111 from $X_{1,0}$, $X_{i,0} + d_i$, $X_{i,0} - d_i$. Then, the calculation unit 120 identifies a quadratic function $z = T(x_1, x_2,...,x_n)$ passing through $3^n$ points on the objective function 111, which are indicated by the combinations of the values of the variables $x_i$ and the function values of the objective function 111. Note that when the objective function 111 has two variables (that is, when $n = 2$), the quadratic function is expressed as the following expression (1), for example.

function is expressed as the following expression (1), for example.

$$a_1x_1^2 + a_2x_2^2 + a_3x_1 + a_4x_2 + a_5x_1x_2 + a_6 \ (1)$$

$a_1$ to $a_6$ in the expression (1) are coefficients calculated by fitting. The optimization request unit 130 generates an energy function for the Ising machine 300 to identify the values of the respective variables $x_1$, $x_2$,..., $x_n$ that make the quadratic function $z = T(x_1, x_2,..., x_n)$ generated by the calculation unit 120 have the minimum value (optimal values of the quadratic function). Note that the energy function minimized by the Ising machine 300 is expressed as the following expression (2).

$$E = -\sum_{<k,h>} w_{k,h}\, g_k g_h - \sum_{k} b_k\, g_k + c \quad (2)$$

In the expression (2), $g_k$ and $g_h$ indicate the k-th and h-th bits of the Ising model, respectively. $W_{k,h}$, $b_k$, and c indicate the coefficients of the energy function. The Ising machine 300 identifies the values of the bits that minimize E expressed by expression (2). Therefore, the optimization request unit 130 sets $W_{k,h}$ and $b_k$ that make the values of bits corresponding to the most appropriate candidates for the optimal values of the quadratic function among the bits corresponding to the respective candidates for the optimal values of the quadratic function be 1 when E expressed by expression (2) has the minimum value. Note that since c is a constant term, the optimization request unit 130 may or may not set c.

The optimization request unit 130 selects $x_{i,1}$, $x_{i,2}$,..., $x_{i,m}$, which are candidates for the optimal values of the quadratic function, for each ($x_i$) of the variables $x_1$, $x_2$,..., $x_n$. For example, m is a division number, and the optimization request unit 130 sets m values selected at equal intervals between $X_{i,0} + d_i$ and $X_{i,0} - d_i$ as $x_{i,1}$, $x_{i,2}$,..., $x_{i,m}$. Note that the optimization request unit 130 may select $x_{i,1}$, $x_{i,2}$,..., $x_{i,m}$ from other than between $X_{i,0} + d_i$ and $X_{i,0} - d_i$. The optimization request unit 130 generates an energy function by setting bits $g_{i,l}$ corresponding to $x_{i,l}$ such that E corresponds to the value of the quadratic function when $x_i = x_{i,l}$ in a case where the values of the bits $g_{i,l}$ are 1. For example, when n = 2, the optimization request unit 130 generates the following expression (3).

$$E = \sum_{<l,q>} T(x_{1,l}g_{1,l}, x_{2,q}g_{2,q}) + p\left(\sum_l g_{1,l} - 1\right)^2 + p\left(\sum_l g_{2,l} - 1\right)^2$$

$$(3)$$

p in expression (3) is a coefficient of a constraint term and is a very large value. The constraint term is defined to make one of the bits $g_{i,1}$, $g_{i,2}$,..., $g_{i,m}$ be 1. The optimization request unit 130 sets $W_{k,h}$ and $b_k$ based on expression (2) and expression (3). Note that the correspondence between the bits $g_k$ and the bits $g_{i,l}$ is defined as $k = l + m \times (i - 1)$. Then, the Ising machine 300 calculates the values of the bits that make the energy function generated by the optimization request unit 130 have the minimum value.

The calculation unit 120 sets the values of the variables $x_1$, $x_2$,..., $x_n$ corresponding to the bits that are 1 when the Ising machine 300 minimizes the energy function as the optimal values $X_{1,g}$, $X_{2,g}$,..., $X_{n,g}$ of the quadratic function. Then, the calculation unit 120 calculates each ($X_{i,g}^*$) of the intermediate reference values $X_{1,g}^*$, $X_{2,g}^*$,..., $X_{n,g}^*$ between the respective fitting reference values $X_{1,0}$, $X_{2,0}$,..., $X_{n,0}$ and the respective optimal values of the quadratic function $X_{1,g}$, $X_{2,g}$,..., $X_{n,g}$. For example, the calculation unit 120 calculates $X_{i,g}^*$ using the following expression (4). $X_{i,g}^* = \gamma X_{i,g} + (1 - \gamma)X_{i,0}$ ... (4)

In expression (4), $0 < \gamma < 1$ is satisfied. Note that the calculation unit 120 may or may not change the value of $\gamma$ for each update. The calculation unit 120 determines one of the calculated intermediate reference values $X_{1,g}^*$, $X_{2,g}^*$,..., $X_{n,g}^*$ and the optimal values of the quadratic function $X_{1,g}$, $X_{2,g}$,..., $X_{n,g}$ as update values $X_{1,1}$, $X_{2,1}$,..., $X_{n,1}$ for updating the fitting reference values $X_{1,0}$, $X_{2,0}$,..., $X_{n,0}$.

For example, the calculation unit 120 calculates $f(X_{1,g}^*, X_{2,g}^*,..., X_{n,g}^*)$ when the variables $x_i$ of the objective function 111 are set to the intermediate reference values $X_{i,g}^*$ and $f(X_{1,g}, X_{2,g},..., X_{n,g})$ when the variables $x_i$ are set to the optimal values of the quadratic function $X_{i,g}$. Then, when $f(X_{1,g}^*, X_{2,g}^*,..., X_{n,g}^*)$ is smaller than $f(X_{1,g}, X_{2,g},..., X_{n,g})$, the calculation unit 120 determines the intermediate reference values $X_{1,g}^*$, $X_{2,g}^*$,..., $X_{n,g}^*$ as the update values $X_{1,1}$, $X_{2,1}$,..., $X_{n,1}$. Furthermore, when $f(X_{1,g}, X_{2,g},..., X_{n,g})$ is smaller than $f(X_{1,g}^*, X_{2,g}^*,..., X_{n,g}^*)$, the calculation unit 120 determines the optimal values of the quadratic function $X_{1,g}$, $X_{2,g}$,..., $X_{n,g}$ as the update values $X_{1,1}$, $X_{2,1}$,..., $X_{n,1}$. Note that when $f(X_{1,g}^*, X_{2,g}^*,..., X_{n,g}^*)$ is equal to $f(X_{1,g}, X_{2,g},..., X_{n,g})$, the calculation unit 120 may determine either the intermediate reference values $X_{1,g}^*$, $X_{2,g}^*$,..., $X_{n,g}^*$ or the optimal values of the quadratic function $X_{1,g}$, $X_{2,g}$,..., $X_{n,g}$ as the update values $X_{1,1}$, $X_{2,1}$,..., $X_{n,1}$.

Then, the calculation unit 120 updates the fitting reference values $X_{1,0}$, $X_{2,0}$,..., $X_{n,0}$ to the update values $x_{i,1}$, $X_{2,1}$,..., $X_{n,1}$, respectively. The calculation unit 120 repeats such update processing of the fitting reference values $X_{1,0}$, $X_{2,0}$,..., $X_{n,0}$ until the distance between $X_{i,0}$ and $X_{i,1}$ becomes equal to or smaller than the threshold value for i = 1 to n. The calculation unit 120 outputs each of the fitting reference values $X_{1,0}$, $X_{2,0}$,..., $X_{n,0}$ when the distance between $X_{i,0}$ and $X_{i,1}$ becomes equal to or smaller than the threshold value for i = 1 to n as the values of the respective variables $x_1$, $x_2$,...,$x_n$ that make the objective function 111 have the minimum value (final solution).

Note that the fitting reference values $X_{1,0}$, $X_{2,0}$,..., $X_{n,0}$ are an extended version of the first reference value x1 described in the first embodiment for a case where there are a plurality of variables. Furthermore, the optimal values of the quadratic function $X_{1,g}$, $X_{2,g}$,..., $X_{n,g}$ are the extended version of the second reference value x2 described in the first embodiment for a case where there are a plurality of variables. Furthermore, the intermediate reference values $X_{1,g}^*$, $X_{2,g}^*$,..., $X_{n,g}^*$ are an extended version of the third reference value x3 described in the first embodiment for a case where there are a plurality of variables.

Thus, the server 100 and the Ising machine 300 repeat the update processing of the fitting reference values $X_{1,0}$, $X_{2,0}$,..., $X_{n,0}$, in cooperation and output the final fitting reference values $X_{i,0}$. as the values of the variables $x_i$ that make the objective function 111 have the minimum value. The calculation unit 120 can efficiently bring the fitting reference values $X_{i,0}$ close to the values of the variables $x_i$ that make the objective function 111 have the minimum value by updating the fitting reference values $X_{i,0}$ based on not only the optimal values of the quadratic function $X_{i,g}$ but also the current fitting reference values $X_{i,0}$.

Next, the procedure for calculating (optimizing) the values of the variables that make the objective function 111 have the minimum value will be described in detail.

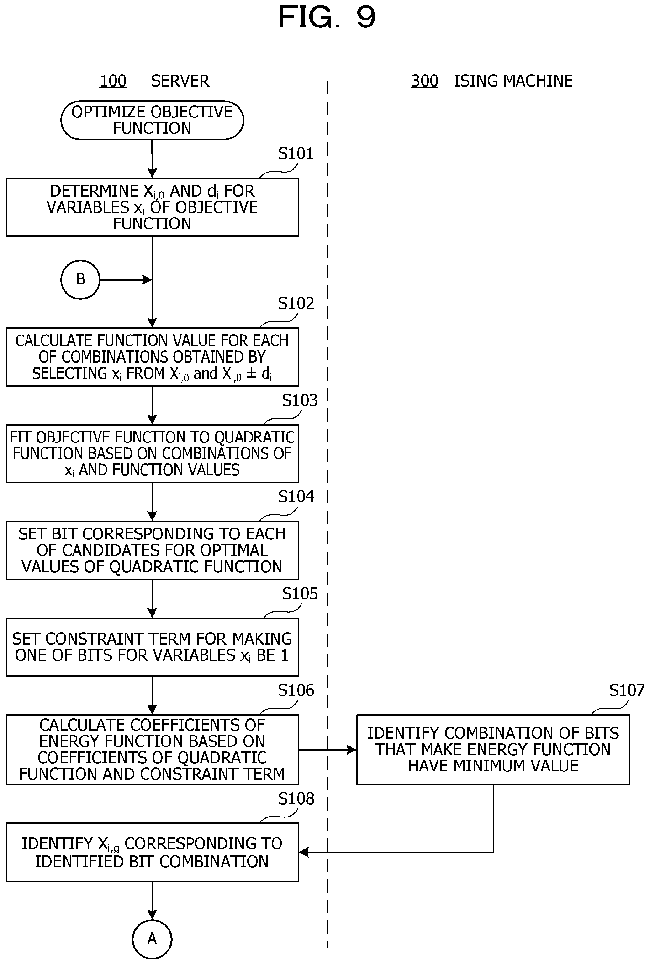

FIG. 9 is a flowchart (Part 1) illustrating an example of the procedure for optimizing the objective function. Hereinafter, the processing illustrated in FIG. 9 will be described in accordance with step numbers.

[Step S101] The calculation unit 120 of the server 100 determines initial values of the fitting reference values $X_{i,0}$ and the width $d_i$ for the variables $x_i$ of the objective function 111. For example, the calculation unit 120 may randomly determine the fitting reference values $X_{1,0}$, or may determine them according to the input from a user. Furthermore, for example, the calculation unit 120 determines the width $d_i$ as a predetermined value (for example, 0.03).

[Step S102] The calculation unit 120 calculates the function value of the objective function 111 for each of the $3^n$ combinations obtained by selecting a value of each of the variables $x_i$ of the objective function 111 from $X_{i,0}$, $X_{i,0} + d_i$, and $X_{i,0} - d_i$.

[Step S103] The calculation unit 120 fits the objective function 111 to the quadratic function based on the function values corresponding to the respective combinations of the values of the variables $x_i$ calculated in step S102. For example, the calculation unit 120 identifies a quadratic function $z = T(x_1, x_2,..., x_n)$ passing through $3^n$ points on the objective function 111, which are indicated by the function values corresponding to the combinations of the values of the variables $x_i$.

[Step S104] The optimization request unit 130 of the server 100 selects candidates for the optimal values of the quadratic function for the variables $x_i$, and sets a bit corresponding to each of the selected candidates. For example, the optimization request unit 130 selects m values $x_{i,1}, x_{i,2},..., x_{i,m}$ selected at equal intervals between $X_{i,0} + d_i$ and $X_{i,0} - d_i$ as candidates for the optimal values of the quadratic function regarding the variables $x_i$. Then, the optimization request unit 130 sets the bits $g_{i,l}$ corresponding to $x_{i,l}$. That is, the optimization request unit 130 sets $n \times m$ bits.

[Step S105] The optimization request unit 130 sets a constraint term for making one of bits for the variables $x_i$ be 1. For example, the optimization request unit 130 sets a constraint term that has a very large value when the values of two or more bits among the bits $g_{i,1}, g_{i,2},..., g_{i,m}$ set in step S104 are 1 or when none of the bits is 1.

[Step S106] The optimization request unit 130 calculates the coefficients of the energy function based on the coefficients of the quadratic function to which the objective function is fitted in step S103 and the constraint term set in step S105. For example, the optimization request unit 130 generates an energy function such that E corresponds to the value of the quadratic function when $x_i = x_{i,l}$ in a case where the bits $g_{i,l}$ are 1. Then, the optimization request unit 130 calculates the coefficients $W_{k,h}$ and $b_k$ of the energy function expressed by the expression (2) based on the generated energy function. Then, the optimization request unit 130 transmits the coefficients $W_{k,h}$ and $b_k$ of the energy function to the control device 200. Then, the control device 200 controls the Ising machine 300 based on the received coefficients of the energy function to start the optimization of the energy function.

[Step S107] The Ising machine 300 identifies a combination of bits that make the energy function have the minimum value according to the control from the control device 200. Specifically, the Ising machine 300 optimizes the combination of bit values by an annealing method by reproducing the quantum phenomena with a digital circuit. For example, the Ising machine 300 identifies the values of bits $g_{i,l}$ when the energy function expressed as expression (2) has the minimum value. Note that the correspondence between the bits $g_k$ and the bits $g_{i,l}$ in expression (2) is defined as $k = l + m \times (i - 1)$. The Ising machine 300 transmits the identified values of the bits $g_{i,l}$ to the server 100 via the control device 200.

[Step S108] The calculation unit 120 identifies the optimal values of the quadratic function $X_{1,g}, X_{2,g},..., X_{n,g}$ corresponding to the bit combination identified by the Ising machine 300. For example, for the variables $x_i$, the calculation unit 120 identifies $x_{i,l}$ corresponding to the bits $g_{i,l}$ that become 1 as the optimal values of the quadratic function $X_{i,g}$.

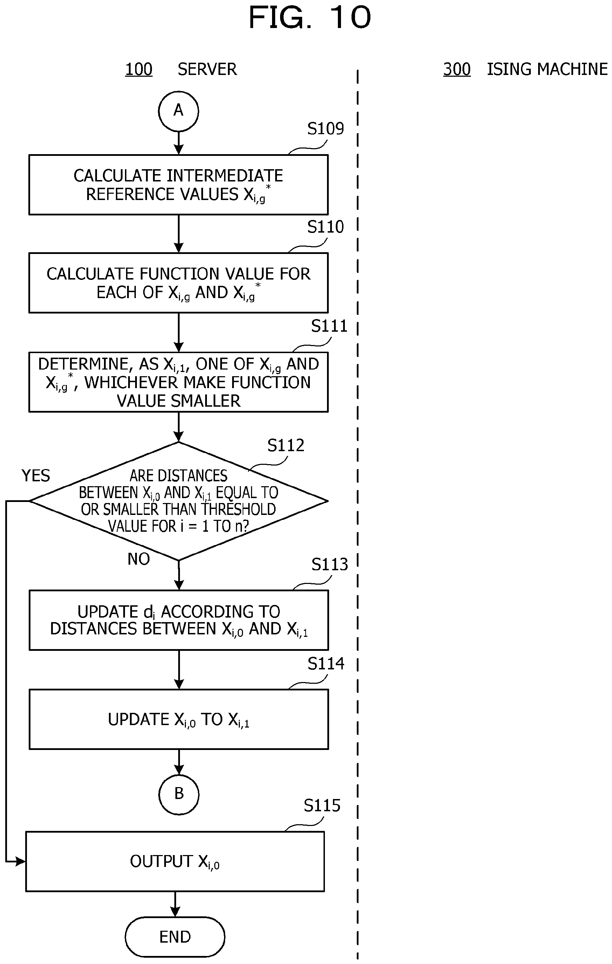

FIG. 10 is a flowchart (Part 2) illustrating an example of the procedure for optimizing the objective function. Hereinafter, processing illustrated in FIG. 10 will be described in accordance with step numbers.

[Step S109] The calculation unit 120 calculates intermediate reference values $X_{i,g}^*$ between the fitting reference values $X_{i,0}$ and the optimal values of the quadratic function $X_{i,g}$. For example, the calculation unit 120 calculates $X_{i,g}^*$ using expression (4).

[Step S110] The calculation unit 120 calculates the function value of the objective function 111 for each of the optimal values $X_{i,g}$ and the intermediate reference values of the quadratic function $X_{i,g}^*$. For example, the calculation unit 120 calculates $f(X_{1,g}^*, X_{2,g}^*,..., X_{n,g}^*)$ when the variables $x_i$ of the objective function 111 are set to $X_{i,g}^*$ and $f(X_{1,g}, X_{2,g},..., X_{n,g})$ when the variables $x_i$ are set to $X_{i,g}$.

[Step S111] The calculation unit 120 determines, as the update value $x_{i,1}$, one of the optimal values $X_{i,g}$ and the intermediate reference values of the quadratic function $X_{i,g}^*$, whichever make the function value of the objective function 111 smaller. For example, when $f(X_{1,g}^*, X_{2,g}^*,..., X_{n,g}^*)$ is smaller than $f(X_{1,g}, X_{2,g},..., X_{n,g})$, the calculation unit 120 determines the intermediate reference values $X_{1,g}^*, X_{2,g}^*,..., X_{n,g}^*$ as the update values $X_{1,1}, X_{2,1},..., X_{n,1}$. Furthermore, when $f(X_{1,g}, X_{2,g},..., X_{n,g})$ is smaller than $f(X_{1,g}^*, X_{2,g}^*,..., X_{n,g}^*)$, the calculation unit 120 determines the optimal values of the quadratic function $X_{1,g}, X_{2,g},..., X_{n,g}$ as the update values $X_{1,1}, X_{2,1},..., X_{n,1}$. Note that when $f(X_{1,g}{}^*, X_{2,g}{}^*,..., X_{n,g}{}^*)$ is equal to $f(X_{1,g}, X_{2,g},..., X_{n,g})$, the calculation unit 120 may determine either the intermediate reference values $X_{1,g}{}^*, X_{2,g}{}^*,..., X_{n,g}{}^*$ or the optimal values of the quadratic function $X_{1,g}, X_{2,g},..., X_{n,g}$ as the update values $X_{1,1}, X_{2,1},..., X_{n,1}$.

[Step S112] The calculation unit 120 determines whether the distances between the fitting reference values $X_{i,0}$ and the update values $X_{i,1}$ are equal to or smaller than the threshold value for i = 1 to n. When the calculation unit 120 determines that the distances between $X_{i,0}$ and $X_{i,1}$ are equal to or smaller than the threshold value for i = 1 to n, the processing proceeds to step S115. Furthermore, when the calculation unit 120 determines that the distances between $X_{i,0}$ and $X_{i,1}$ are larger than the threshold value for i = 1 to n, the processing proceeds to step S113.

[Step S113] The calculation unit 120 updates the width $d_i$ according to the distances between the fitting reference values $X_{i,0}$ and the update values $X_{i,1}$. Here, the calculation unit 120 sets $d_i$ to be smaller as the distances between $X_{i,0}$ and $X_{i,1}$ are smaller. For example, the calculation unit 120 sets $d_i = 0.03$ when $0.01 \leq |X_{i,0} - X_{i,1}| < 0.1$, $d_i = 0.001$ when $0.001 \leq |X_{i,0} - X_{i,1}| < 0.01$, and $d_i = 0.0001$ when $|X_{i,0} - X_{i,1}| < 0.001$.

[Step S114] The calculation unit 120 updates the fitting reference values $X_{i,0}$ to the update values $X_{i,1}$. Then, the processing proceeds to step S102.

[Step S115] The calculation unit 120 outputs the fitting reference values $X_{i,0}$ as the values of the variables $x_i$ that make the objective function 111 have the minimum value. For example, the calculation unit 120 transmits the fitting reference values $X_{1,0}, X_{2,0},..., X_{n,0}$ to the terminal devices 31, 32,..., and cause the terminal devices 31, 32,... to display the fitting reference values $X_{1,0}, X_{2,0},..., X_{n,0}$ as values of the respective variables $x_1, x_2,..., x_n$ that make the objective function 111 have the minimum value, respectively.

As described above, the calculation unit 120 fits the objective function 111 to the quadratic function in the range of the width $d_i$ from the fitting reference values $X_{i,0}$. Then, the calculation unit 120 repeats the processing of calculating the optimal values of the quadratic function $X_{i,g}$ based on the optimization result of the energy function using the Ising machine 300, and updating the fitting reference values $X_{i,0}$ based on the intermediate reference values $X_{i,g}{}^*$ between $X_{i,g}$ and $X_{i,0}$. Then, the calculation unit 120 outputs the final fitting reference values $X_{i,0}$ as the values of the variables $x_i$ that make the objective function 111 have the minimum value.

In this way, the calculation unit 120 updates the fitting reference values $X_{i,0}$ based on not only the optimal values of the quadratic function $X_{i,g}$ but also the current fitting reference values $X_{i,0}$. Here, the values of the variables $x_i$ that make the objective function 111 have the minimum value are often between the optimal values $X_{i,g}$ and the fitting reference values $X_{i,0}$ of the quadratic function. Therefore, the calculation unit 120 can efficiently bring the fitting reference values $X_{i,0}$ close to the values of the variables $x_i$ that make the objective function 111 have the minimum value by updating the fitting reference values $X_{i,0}$ based on the intermediate reference values $X_{i,g}{}^*$ between $X_{i,g}$ and $X_{i,0}$. Therefore, the calculation unit 120 can reduce the number of repetitions of the processing of updating the fitting reference values $X_{i,0}$, and can reduce the calculation time for optimizing the objective function 111.

Furthermore, the optimization request unit 130 sets candidate bits for the optimal values of the quadratic function $X_{1,g}$, and the Ising machine 300 identifies the combination of bits that makes the energy function have the minimum value, so that the optimal values of the quadratic function $X_{i,g}$ can be calculated quickly. Furthermore, the calculation unit 120 repeats the update processing of the fitting reference value $X_{i,0}$ until the distances between the fitting reference values $X_{i,0}$ and the update values $X_{i,1}$ become equal to or smaller than the threshold value while reducing the width $d_i$ according to the distances between the fitting reference values $X_{i,0}$ and the update values $X_{i,1}$. In this way, the calculation unit 120 can efficiently narrow down the values of the variables $x_i$ that make the objective function 111 have the minimum value by reducing the width $d_i$. Then, the calculation unit 120 can output the fitting reference values $X_{i,0}$ when the values have converged as the values of the variables $x_i$ that make the objective function 111 have the minimum value.

The values of the variables $x_i$ that make the objective function 111 have the minimum value may be closer to the optimal values of the quadratic function $X_{i,g}$ than to the intermediate reference values $X_{i,g}{}^*$. Therefore, the calculation unit 120 calculates the function value of the objective function 111 when the variables $x_i$ are set to the intermediate reference values $X_{i,g}{}^*$ and the function value of the objective function 111 when the variables $x_i$ are set to the optimal values $X_{i,g}$ of the quadratic function. Then, the calculation unit 120 determines, as the update values $X_{i,1}$, one of the intermediate reference value $X_{i,g}{}^*$ and the optimal value $X_{i,g}$ of the quadratic function, whichever make the function value of the objective function 111 smaller when set as the variables $x_i$. Thus, the calculation unit 120 can update the fitting reference value $X_{i,0}$ to one of the intermediate reference values $X_{i,g}{}^*$ and the optimal values $X_{i,g}$ of the quadratic function closer to the values of the variables $x_i$ that make the objective function 111 have the minimum value.

Next, the results of simulating the processing of updating the fitting reference values $X_{i,0}$ based on the intermediate reference values $X_{i,g}{}^*$ and the processing of updating the fitting reference values $X_{i,0}$ to the optimal values $X_{i,g}$ of the quadratic function will be compared.

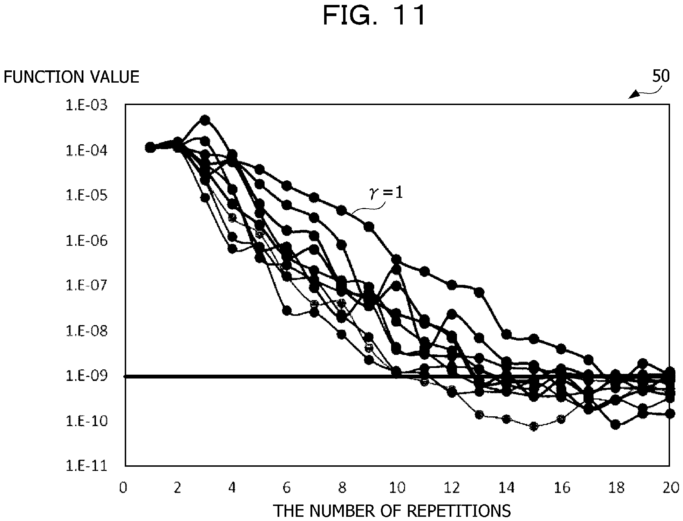

FIG. 11 is a diagram illustrating an example of the relationship between the number of repetitions of the update processing and the function value of the objective function. A graph 50 indicates the result of simulating the processing of updating the fitting reference values $X_{i,0}$ based on the intermediate reference values $X_{i,g}{}^*$ when the $\gamma$ value is set to each of 0.1, 0.2, 0.3, 0.4, 0.5, 0.6, 0.7, 0.8, and 0.9. Furthermore, the graph 50 indicates the result of simulating the processing of updating the fitting reference values $X_{i,0}$ to the optimal values $X_{i,g}$ of the quadratic function (that is, $\gamma$ = 1). Note that the vertical axis of the graph 50 indicates the function value of the objective function 111, and the horizontal axis of the graph 50 indicates the number of repetitions of the update processing. The objective function 111 used for the simulation has 6 variables (n = 6) and the minimum value is 0.

The graph 50 indicates that in the case of the processing of updating the fitting reference values $X_{i,0}$ based on the intermediate reference values $X_{i,g}^*$ ($\gamma$ = 0.1 to 0.9), the function value of the objective function 111 becomes equal to or smaller than $10^{-9}$ (1E-09), which is sufficiently close to the minimum value, by repeating the processing 11 to 17 times. On the other hand, the graph 50 indicates that in the case of the processing of updating the fitting reference values $X_{i,0}$ to the optimal value $X_{i,g}$ of the quadratic function ($\gamma$ = 1), the function value of the objective function 111 becomes equal to or smaller than $10^{-9}$ by repeating the processing 18 times.

Thus, the server 100 can reduce the number of times of updating the fitting reference values $X_{i,0}$ by updating the fitting reference values $X_{i,0}$ based on the intermediate reference values $X_{i,g}^*$. When the number of repetitions is N, the calculation time for one calculation of the objective function 111 is $T_f$, the number of variables of the objective function 111 is n, and the calculation time by the Ising machine 300 is $T_{is}$, the calculation time of the entire processing is expressed as $N \times (Tf \times 3^n + T_{is})$. Since $3^{10}$ = 59049, when, for example, the value of n is large, the calculation time of the entire processing is greatly reduced by reducing the number of repetitions N. Thus, the server 100 can reduce the calculation time for optimizing the objective function 111 by reducing the number of times of updating the fitting reference values $X_{i,0}$.

In the above-described example, the value of $\gamma$ is predetermined, but the server 100 may change the value of $\gamma$ for each time of update processing. The simulation result when the server 100 repeats the processing of updating the fitting reference values $X_{i,0}$ while changing the value of $\gamma$ for each time of update processing will be described below.

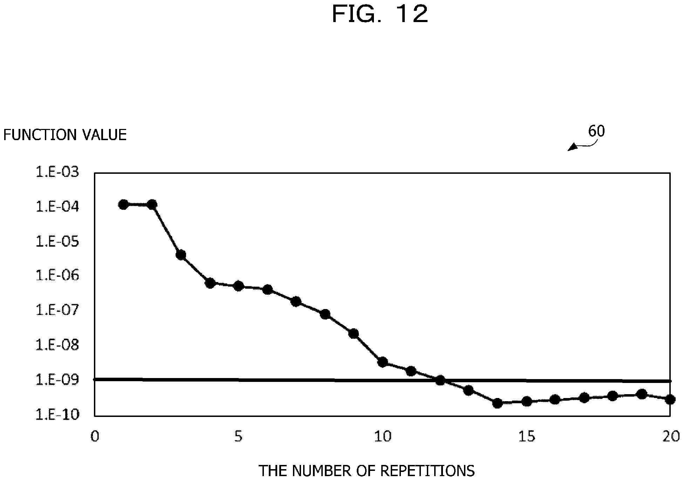

FIG. 12 is a diagram illustrating another example of the relationship between the number of repetitions of the update processing and the function value of the objective function. A graph 60 indicates the result of simulating the processing of updating the fitting reference values $X_{i,0}$ while changing the value of $\gamma$ for each time of update processing. Here, the server 100 calculates the function value of the objective function 111 when the value of $\gamma$ is set to each of 0.1, 0.2, 0.3, 0.4, 0.5, 0.6, 0.7, 0.8, and 0.9, and updates the fitting reference value $X_{i,0}$ using the value of $\gamma$ that makes the function value have the minimum value.

The graph 60 indicates that in the case of the processing of updating the fitting reference values $X_{i,0}$ while changing the value of $\gamma$, the function value of the objective function 111 becomes equal to or smaller than $10^{-9}$ by repeating the processing 12 times. The server 100 changes the value of $\gamma$ for each time of update processing as described above, so that it is possible to reduce the number of times of updating the fitting reference values $X_{i,0}$ to an extent similar to that in the case where the value of $\gamma$ is appropriately determined.

[Other Embodiments]

In the second embodiment, the Ising machine 300 having the plurality of neuron circuits 311, 312,..., 31n seeks for the solution of the combination optimization problem, but the same processing may be implemented by a von Neumann computer similar to the server 100. For example, the solution of the combination optimization problem can be sought for by reproducing the state transition processing of quantum annealing by software simulation using a von Neumann computer. In that case, the server 100 may seek for a solution to the combination optimization problem.

Furthermore, in the second embodiment, the server 100 and the control device 200 are separated, but it is also possible to implement the functions of the control device 200 in the server 100.

The embodiments have been described above by way of example, and the configuration of each portion described in the embodiments may be replaced with another configuration having a similar function. Furthermore, any other components and steps may be added. Moreover, any two or more configurations (features) of the above-described embodiments may be combined.

All examples and conditional language provided herein are intended for the pedagogical purposes of aiding the reader in understanding the invention and the concepts contributed by the inventor to further the art, and are not to be construed as limitations to such specifically recited examples and conditions, nor does the organization of such examples in the specification relate to a showing of the superiority and inferiority of the invention. Although one or more embodiments of the present invention have been described in detail, it should be understood that the various changes, substitutions, and alterations could be made hereto without departing from the spirit and scope of the invention.

**Claims**

1. An optimization device comprising:

   memory; and

processor circuitry coupled to the memory, the processor circuitry being configured to perform processing, the processing including:

performing an iteration processing until a predetermined condition is satisfied, the iteration processing including: processing of generating a quadratic function that is approximate to an objective function within a predetermined range from a first reference value that indicates a value of a variable of the objective function; processing of calculating a second reference value that indicates a value of the variable by seeking for an extreme value of the quadratic function; processing of calculating a third reference value that indicates a value of the variable based on the second reference value and the first reference value; and processing of updating the first reference value based on the third reference value, the predetermined condition being a condition regarding a distance between the first reference value and the second reference value or a distance between the first reference value and the third reference value; and

in response that the predetermined condition is satisfied, outputting the first reference value as a value of the variable that makes the objective function have an extreme value.

2. The optimization device according to claim 1, wherein the third reference value is a value between the second reference value and the first reference value.

3. The optimization device according to claim 1 or 2, wherein the processing of calculating a second reference value is performed by causing an Ising machine to seek for an extreme value of the quadratic function in order to calculate the second reference value by using a result of seeking for an extreme value of the quadratic function.

4. The optimization device according to any one of claims 1 to 3, wherein the predetermined condition is configured to be satisfied in case where the distance between the first reference value and the second reference value or the distance between the first reference value and the third reference value becomes equal to or smaller than a threshold value.

5. The optimization device according to any one of claims 1 to 4, wherein a width of the predetermined range from the first reference value is updated based on a distance between the first reference value before update and the first reference value after the update.

6. The optimization device according to any one of claims 1 to 5, wherein the processing of updating is configured to:

calculate a first function value that is a value of the objective function in case where a value of the variable is set to the second reference value;
calculate a second function value that is a value of the objective function in case where a value of the variable is set to the third reference value; and
update the first reference value to the second reference value or the third reference value based on a magnitude relationship between the first function value and the second function value.

7. An optimization method performed by a computer, the method comprising:

performing an iteration processing until a predetermined condition is satisfied, the iteration processing including: processing of generating a quadratic function that is approximate to an objective function within a predetermined range from a first reference value that indicates a value of a variable of the objective function; processing of calculating a second reference value that indicates a value of the variable by seeking for an extreme value of the quadratic function; processing of calculating a third reference value that indicates a value of the variable based on the second reference value and the first reference value; and processing of updating the first reference value based on the third reference value, the predetermined condition being a condition regarding a distance between the first reference value and the second reference value or a distance between the first reference value and the third reference value; and

in response that the predetermined condition is satisfied, outputting the first reference value as a value of the variable that makes the objective function have an extreme value.

8. An optimization program comprising instructions which, when the optimization program is executed by a computer, cause the computer to perform processing, the processing comprising:

performing an iteration processing until a predetermined condition is satisfied, the iteration processing including:

processing of generating a quadratic function that is approximate to an objective function within a predetermined range from a first reference value that indicates a value of a variable of the objective function; processing of calculating a second reference value that indicates a value of the variable by seeking for an extreme value of the quadratic function; processing of calculating a third reference value that indicates a value of the variable based on the second reference value and the first reference value; and processing of updating the first reference value based on the third reference value, the predetermined condition being a condition regarding a distance between the first reference value and the second reference value or a distance between the first reference value and the third reference value; and

in response that the predetermined condition is satisfied, outputting the first reference value as a value of the variable that makes the objective function have an extreme value.

# FIG. 1

# FIG. 2

# FIG. 3

# FIG. 4

# FIG. 5

FIG. 6

DETERMINE NEW CENTER POINT FROM BETWEEN
CENTER POINT AND MINIMUM POINT

FIT OBJECTIVE FUNCTION TO
QUADRATIC FUNCTION WHILE
SETTING NEW CENTER POINT AS
CENTER OF FITTING

# FIG. 7

FIG. 8

# FIG. 9

<u>100</u>   SERVER                              <u>300</u>   ISING MACHINE

( OPTIMIZE OBJECTIVE FUNCTION )

↓ S101

DETERMINE $X_{i,0}$ AND $d_i$ FOR VARIABLES $x_i$ OF OBJECTIVE FUNCTION

(B) →

↓ S102

CALCULATE FUNCTION VALUE FOR EACH OF COMBINATIONS OBTAINED BY SELECTING $x_i$ FROM $X_{i,0}$ and $X_{i,0} \pm d_i$

↓ S103

FIT OBJECTIVE FUNCTION TO QUADRATIC FUNCTION BASED ON COMBINATIONS OF $x_i$ AND FUNCTION VALUES

↓ S104

SET BIT CORRESPONDING TO EACH OF CANDIDATES FOR OPTIMAL VALUES OF QUADRATIC FUNCTION

↓ S105

SET CONSTRAINT TERM FOR MAKING ONE OF BITS FOR VARIABLES $x_i$ BE 1

↓ S106

CALCULATE COEFFICIENTS OF ENERGY FUNCTION BASED ON COEFFICIENTS OF QUADRATIC FUNCTION AND CONSTRAINT TERM

→ S107

IDENTIFY COMBINATION OF BITS THAT MAKE ENERGY FUNCTION HAVE MINIMUM VALUE

↓ S108

IDENTIFY $X_{i,g}$ CORRESPONDING TO IDENTIFIED BIT COMBINATION ←

↓

(A)

# FIG. 10

(A)

S109

CALCULATE INTERMEDIATE
REFERENCE VALUES $X_{i,g}{}^*$

S110

CALCULATE FUNCTION VALUE FOR
EACH OF $X_{i,g}$ AND $X_{i,g}{}^*$

S111

DETERMINE, AS $X_{i,1}$, ONE OF $X_{i,g}$ AND
$X_{i,g}{}^*$, WHICHEVER MAKE FUNCTION
VALUE SMALLER

S112

YES

ARE DISTANCES
BETWEEN $X_{i,0}$ AND $X_{i,1}$ EQUAL TO
OR SMALLER THAN THRESHOLD
VALUE FOR i = 1 TO n?

NO

S113

UPDATE $d_i$ ACCORDING TO
DISTANCES BETWEEN $X_{i,0}$ AND $X_{i,1}$

S114

UPDATE $X_{i,0}$ TO $X_{i,1}$

(B)

S115

OUTPUT $X_{i,0}$

END

# FIG. 11

FUNCTION VALUE

50

THE NUMBER OF REPETITIONS

$\gamma = 1$

# FIG. 12

Europäisches Patentamt

European Patent Office

Office européen des brevets

# EUROPEAN SEARCH REPORT

**Application Number**

EP 21 16 7146

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Webb Kyle: "MAE4020/5020- Numerical Methods with MATLAB", Lecture notes numerical method, 2 March 2015 (2015-03-02), pages 1-78, XP055835319, Retrieved from the Internet: URL:https://web.engr.oregonstate.edu/~webb ky/MAE4020_5020_files/Section%205%20Root%2 0Finding%20and%20Optimization.pdf [retrieved on 2021-08-26] * pages 64, 67, 70 and 71 * & Webb Kyle: "Index of /~webbky/MAE4020_5020_files", , 26 August 2021 (2021-08-26), page 1, XP055835325, Retrieved from the Internet: URL:https://web.engr.oregonstate.edu/~webb ky/MAE4020_5020_files/ [retrieved on 2021-08-26] | 1-8 | INV. G06F17/11 G06N5/00 |
| A | MANDAL AVRADIP ET AL: "Compressed quadratization of higher order binary optimization problems", PROCEEDINGS OF THE 17TH ACM INTERNATIONAL CONFERENCE ON COMPUTING FRONTIERS, ACMPUB27, NEW YORK, NY, USA, 11 May 2020 (2020-05-11), pages 126-131, XP058475116, DOI: 10.1145/3387902.3392627 ISBN: 978-1-4503-7956-4 * the whole document * | 1-8 | TECHNICAL FIELDS SEARCHED (IPC) G06F G06N |

-/--

The present search report has been drawn up for all claims

| Place of search | Date of completion of the search | Examiner |
|---|---|---|
| Berlin | 30 August 2021 | Huguet Serra, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt
European
Patent Office
Office européen
des brevets

**EUROPEAN SEARCH REPORT**

Application Number

EP 21 16 7146

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | STUART HADFIELD: "Quantum Algorithms for Scientific Computing and Approximate Optimization", ARXIV.ORG, CORNELL UNIVERSITY LIBRARY, 201 OLIN LIBRARY CORNELL UNIVERSITY ITHACA, NY 14853, 8 May 2018 (2018-05-08), XP080876200, * the whole document * | 1-8 | |

TECHNICAL FIELDS
SEARCHED (IPC)

The present search report has been drawn up for all claims

| Place of search | Date of completion of the search | Examiner |
|---|---|---|
| Berlin | 30 August 2021 | Huguet Serra, G |

page 2 of 2

**REFERENCES CITED IN THE DESCRIPTION**

**Patent documents cited in the description**

- JP 6019951 A

- JP 2018087753 A